# EUROPÄISCHE PATENTSCHRIFT

(11) **EP 3 860 800 B1**
(45) Veröffentlichungstag und Bekanntmachung des Hinweises auf die Patenterteilung: **09.11.2022**
(21) Anmeldenummer: 19786280.8
(22) Anmeldetag: 27.09.2019
(51) Int. Cl.: B23K 35/02, B23K 35/40, C21D 6/04, C21D 9/52, C21D 9/00, B23K 35/30

(54) **VERFAHREN ZUR KÄLTEBEHANDLUNG VON DRAHTELEKTRODEN**
METHOD FOR COLD TREATING WIRE ELECTRODES
PROCÉDÉ DE TRAITEMENT À FROID DE FILS-ÉLECTRODES

(30) Priorität: 02.10.2018 DE 102018007771
(43) Veröffentlichungstag der Anmeldung: 11.08.2021
(73) Patentinhaber: Messer SE & Co. KGaA, 65812 Bad Soden (DE)
(72) Erfinder: KAMPFFMEYER, Dr. Dirk, 52441 Linnich (DE); BÖCKLER, Thomas, 40470 Düsseldorf (DE); SELDERS, Georg, 47652 Weeze-Wemb (DE); HILDEBRANDT, Dr. Bernd, 47918 Tönisvorst (DE); ROCKSER, Mario, 17498 Hinrichshagen (DE)
(74) Vertreter: Münzel, Joachim R.
(86) Internationale Anmeldenummer: PCT/EP2019/076297
(87) Internationale Veröffentlichungsnummer: WO 2020/070025

(56) Entgegenhaltungen:
- CN-A- 1 435 505
- US-A- 4 482 005

## Beschreibung

Die Erfindung betrifft ein Verfahren zur thermischen Behandlung einer Drahtelektrode nach dem Oberbegriff des Patentanspruchs 1.

Zu den Schweißverfahren mit stromgeführter Drahtelektrode (auch als "stromführende Drahtelektrode" bezeichnet) gehören die meisten klassischen Lichtbogenschweißverfahren, wie das MSG-Schweißen oder das UP-Schweißen. Darüber hinaus werden stromgeführte Drahtelektroden auch beim Laser-Hybrid-Schweißen eingesetzt. Die dabei eingesetzten Drahtelektroden bestehen aus einem Material, das dem Material der zu schweißenden Grundwerkstoffe angepasst ist. Sie können als Massivdrähte aber auch Fülldrähte ausgebildet sein. Im letzteren Falle besteht die Drahtelektrode aus einem Rohr, das mit einem Metallpulver gefüllt ist. Bei der Herstellung der Drähte werden verschieden Ziehprozesse und Wärmebehandlungen eingesetzt, die die Qualität des Drahtzusatzes beeinflussen.

Charakteristisch für die Schweißverfahren mit stromgeführter Drahtelektrode ist eine Neigung zu Schweißspritzern, die sich je nach Wahl der elektrischen Parameter und des Schutzgases stärker oder schwächer ausprägt. Als Schweißspritzer werden kleine, oft kugelige Anschmelzstellen auf der Oberfläche des geschweißten Werkstücks oder der Schweißnaht bezeichnet. Sie rühren von Tropfen flüssigen Metalls her, die während des Schweißvorgangs aus dem Schmelzbad oder dem flüssigen Ende der Elektrode ausgeworfen werden. Schweißspritzer sind in den meisten Fällen unschädlich für die Qualität der Schweißverbindung, erfordern mitunter jedoch eine erhebliche, in der Regel manuelle Nacharbeit der Werkstoffoberfläche und können zudem die Schutzgasdüse beschädigen.

Zur Vermeidung von Schweißspritzern wurde bislang vorgeschlagen, bestimmte Parameter im Schweißprozess zu verändern. Beispielsweise wird in der EP 1 182 001 A1 oder der EP 273 540 A1 vorgeschlagen, die Stromzufuhr im Hinblick auf eine möglichst geringe Spritzerneigung zu steuern. Gemäß der Lehre der EP 2 848 351 A1 soll die Neigung zu Schweißspritzern durch eine spezielle Schutzgaszuführung zu reduzieren sein. Weiterhin kann durch die Wahl eines geeigneten, insbesondere einem hohen Gehalt an Helium aufweisenden Schutzgases die Spritzerneigung reduziert werden, wie beispielsweise aus der EP 1 256 410 A2 oder der EP 0 494 521 A1 bekannt.

Es wurde auch bereits versucht, durch eine Optimierung der Elektrodenlegierung die Neigung zu Schweißspritzern beim Schweißen zu reduzieren. So wird beispielsweise in der EP 0 904 888 A1, der EP 0 897 774 A1 oder der DE 2 521 276 A1 vorgeschlagen, die Elektroden aus einem speziellen Legierungsmaterial zu fertigen, das eine reduzierte Spritzerneigung aufweisen soll.

Aus der CN 1435505 A ist bekannt, nicht-abschmelzende Elektroden für das Widerstandspunktschweißen vor ihrem Einsatz einer Kältebehandlung mit flüssigem Stickstoff zu unterziehen. Die Kältebehandlung erhöht die Lebensdauer der Elektroden und soll zudem die Spritzerneigung verringern.

Die im Stande der Technik beschriebenen Maßnahmen haben sich bewährt, sind jedoch im Hinblick auf die Reduzierung der Spritzerneigung bei abschmelzenden Drahtelektroden noch verbesserungsfähig. Insbesondere setzen sie die Verwendung aufwendiger elektrischer Steuerungseinrichtungen, spezieller Schutzgaszuführungen und/oder vergleichsweise teurer Schweißzusatzwerkstoffe oder Schutzgase voraus. Der Erfindung liegt die Aufgabe zugrunde, das Auftreten von Schweißspritzern beim Schweißen mit stromgeführter Drahtelektrode mit einem geringen Aufwand zu reduzieren.

Diese Aufgabe wird durch ein Verfahren mit den Merkmalen des Patentanspruchs 1 gelöst. Vorteilhafte Ausgestaltungen sind den Unteransprüchen zu entnehmen. Erfindungsgemäß durchlaufen die Drahtelektroden nach ihrer Herstellung und vor ihrem bestimmungsgemäßen Einsatz als abschmelzende, stromgeführte Drahtelektrode eine Kältebehandlung, während der sie auf eine untere Zieltemperatur von unter minus 50°C, bevorzugt unter minus 100°C, abgekühlt werden. Überraschend hat sich gezeigt, dass sich das Schweißergebnis beim Einsatz von stromgeführten Drahtelektroden, die nach dem erfindungsgemäßen Verfahren behandelt wurden, gegenüber dem Einsatz von unbehandelten stromgeführten Drahtelektroden bei sonst gleichen Schweißparametern wesentlich verbessert. Insbesondere reduziert sich die Neigung zu Schweißspritzern deutlich, wodurch die erforderliche Nacharbeit der Schweißnaht verringert wird.

Als "Kältebehandlung" soll im Rahmen dieser Erfindung ein Verfahren bezeichnet werden, bei dem ein Werkstück Temperaturen von -50°C und darunter ausgesetzt wird. Die Abkühlung erfolgt dabei in der Regel durch direkten oder indirekten Kontakt mit einem kryogenen Medium, beispielsweise kalter gasförmiger oder verflüssigter Stickstoff. Die Kältebehandlung erfolgt bevorzugt in einem geschlossenen Behälter (Kältekammer), in dem eine entsprechend niedrige Behandlungstemperatur durch direkten oder indirekten Wärmekontakt der Drahtelektrode mit einem Kältemittel eingestellt wird. Beispielsweise erfolgt die Einstellung der Behandlungstemperatur durch Erzeugen einer entsprechend temperierten Atmosphäre in der Kältekammer. Zur Erzeugung der temperierten Atmosphäre in der Kältekammer wird beispielsweise außerhalb der Kältekammer ein inertes Gas, beispielsweise Stickstoff oder ein Edelgas, auf eine entsprechende Temperatur gebracht und anschließend der Kältekammer zugeführt.

Bislang bekannt gewordene Kältebehandlungen metallischer Werkstücke dienen vorwiegend der Steigerung der Härte und der Verschleißbeständigkeit. Ein Beispiel ist die Umwandlungshärtung von Stahl. Hierbei wird das Werkstück zunächst auf eine Temperatur von über 723°C erwärmt, sodass sich das bei Raumtemperatur vorliegende α-Eisen (Ferrit) in γ-Eisen (Austenit) umwandelt. Bei einer anschließenden raschen Abkühlung (Abschreckung) ordnen sich die Eisenatome zu einem durch den Kohlenstoff tetragonal verzerrten kubisch- raumzentrierten Kristallgitter an, den sog. Martensit und damit zu einem insgesamt härteren Gefüge. Die Härte des Werkstücks kann weiter dadurch gesteigert werden, dass das Werkstück im Anschluss an die Wärmebehandlung auf eine Temperatur zwischen minus 70°C und minus 180°C abgekühlt und auf dieser Temperatur für eine Zeitdauer von beispielsweise 15h gehalten wird. Bei einer solchen Kältebehandlung wandelt sich im Gefüge des Werkstücks noch vorhandener Austenit ("Restaustenit") in Martensit um. Verfahren dieser Art zur Kältebehandlung von Werkstücken aus vorwiegend eisenhaltigen Werkstoffen sind beispielsweise aus der US 6 537 396 B1, der US 3 819 428 B1, der EP 124 29 29 A1 und dem Artikel von W. Lausecker, "Wie cool ist das - Die Tieftemperaturbehandlung von Zerspanung-Werkzeugen", Werkzeug-Technik 126, 15. Juni 2012, bekannt. In der ein Verfahren zur Tiefsttemperatur-Materialbehandlung betreffenden Druckschrift DE 25 17 147 A1 werden verschiedene, kälteinduzierte Umlagerungsprozesse in kohlenstoffhaltigen Stahllegierungen und deren Auswirkungen auf die Verschleißfestigkeit und Korrosionsbeständigkeit beschrieben. Dagegen war es bislang unbekannt, dass eine Kältebehandlung von Schweißzusatzwerkstoffen zu einer Veränderung der Schweißqualität führt. Insbesondere war nicht bekannt, dass eine Kältebehandlung von Drahtelektroden die Neigung zu Schweißspritzern bei deren Einsatz als stromgeführte Drahtelektrode reduziert und insoweit die Qualität des Schweißdrahtes verbessert. Die Ursache für die reduzierte Neigung zu Schweißspritzern erfindungsgemäß behandelter Drahtelektroden und ein möglicher Zusammenhang mit einer durch die Kältebehandlung induzierten Gefügeänderung ist nicht bekannt.

Die untere Zieltemperatur, also die tiefste Abkühltemperatur, beträgt bevorzugt zwischen minus 50°C und minus 195°C, besonders bevorzugt zwischen minus 100°C und minus 185°C, wobei Werte unter minus 150°C besonders gute Ergebnisse zeigen.

Bei der das Verfahren abschließenden oberen Zieltemperatur handelt es sich um einen Temperaturwert, der geeignet ist, die Kondensation von Wasser aus einer insbesondere bei Normalbedingungen (20°C) vorliegenden Umgebungsatmosphäre zu verhindern, um Korrosionen an der Drahtoberfläche zu vermeiden. Bis zum Erreichen der oberen Zieltemperatur erfolgt die Durchführung des erfindungsgemäßen Verfahrens daher bevorzugt in eine inerten Atmosphäre mit geringem Wasseranteil, beispielsweise in einer Atmosphäre, die überwiegend aus gasförmigem Stickstoff und/oder einem Edelgas besteht. Beispielsweise beträgt die obere Zieltemperatur zwischen 20°C und 40°C. Eine Wärmebehandlung mit darüber hinaus gehenden Temperaturen ist erfindungsgemäß weder vor noch nach der Kältebehandlung erforderlich.

Eine besonders vorteilhafte Ausgestaltung der Erfindung sieht vor, dass die Drahtelektrode im Anschluss an die Abkühlphase und vor der Aufwärmphase eine Haltephase durchläuft, in der die Drahtelektrode für eine Dauer von mindestens 30s auf der unteren Zieltemperatur gehalten wird. Bevorzugt beträgt die Dauer der Haltephase zwischen 1 min und 120 min.

Die Abkühlung und Aufwärmung der Drahtelektroden erfolgt bevorzugt langsam, um sicherzustellen, dass es zu keinem Temperaturschock kommt und eine vollständige und gleichmäßige Durchkühlung des Werkstücks erzielt wird. Demzufolge erweist es sich als vorteilhaft, wenn die Abkühlung der Drahtelektrode in der Abkühlphase und/oder das Aufwärmen der Drahtelektrode in der Aufwärmphase nicht rascher als mit einer Temperaturänderung (Geschwindigkeit) ΔT/Δt von ΔT/Δt ≤ 10 °C/min erfolgt, bevorzugt beträgt ΔT/Δt zwischen 1 °C/min und 10 °C/min, besonders bevorzugt zwischen 1 °C/min und 3 °C/min (Unterbrechungszeiten beim Abkühl- bzw. Aufwärmvorgang jeweils nicht eingerechnet).

Um eine gleichmäßige Abkühlung bzw. Aufwärmung zu gewährleisten, ist es darüber hinaus vorteilhaft, den Abkühlvorgang in der Abkühlphase und/oder den Aufwärmvorgang der Aufwärmphase die Abkühlung bzw. Aufwärmung der Drahtelektrode mehrfach zu unterbrechen und die Drahtelektrode für eine vorgegebene Zeitdauer auf einer vorgegebenen Zwischentemperatur zu halten (Zwischenhaltephase). Beispielsweise kann in Abständen von 5°C bis 50°C jeweils eine Unterbrechung eingefügt werden, während der das Werkstück im wesentlichen auf der erreichten Temperatur gehalten wird. Im Anschluss an die Zwischenhaltephase wird der Abkühlvorgang bzw. der Aufwärmvorgang wie zuvor fortgeführt. Während der Unterbrechungen können im Kristallverband des Werkstückmaterials noch mit einer vergleichsweise hohen Diffusionsgeschwindigkeit Umlagerungsprozesse stattfinden, die die Homogenität des Werkstoffes und damit Ausprägung positiver Werkstoffeigenschaften begünstigen können. Die Dauer einer Zwischenhaltephase in der Abkühlphase und/oder der Aufwärmphase liegt erfindungsgemäß bevorzugt bei jeweils mindestens 30s, bevorzugt jeweils zwischen 1 min und 120 min.

Eine besonders vorteilhafte Ausgestaltung der Erfindung sieht vor, das Werkstück während der Abkühlphase und/oder der Haltephase und/oder einer Zwischenhaltephase ein- oder mehrmals zu erwärmen und anschließend wieder auf die untere Zieltemperatur oder eine andere Temperatur abzukühlen. Eine solche zwischenzeitliche Aufwärmphase kann an die Stelle oder ergänzend zur einer Zwischenhaltephase erfolgen. Durch die zwischenzeitlichen Aufwärmphasen werden im behandelten Material Spannungen abgebaut, die aufgrund der Temperaturänderungen im Verlauf der Kältebehandlung im Material auftreten können. Zusammen mit einer dem jeweiligen Werkstück angepassten Abkühlgeschwindigkeit verhindern zwischenzeitliche Aufwärmphasen so eine Qualitätsminderung der Elektrode; insbesondere verhindern sie bei formgeschlossenen Drahtelektroden einen Verzug des Mantelmaterials.

Eine solche zwischenzeitliche Aufwärmphase umfasst bevorzugt eine Erwärmung der Elektrode erfolgenden Aufwärmphase um 10°C bis 50°C während der Abkühlphase und/oder der Haltephase, wobei die Anfangstemperatur (also die Temperatur vor Beginn der Kältebehandlung) bevorzugt nicht überschritten wird. Zwischenzeitliche Aufwärmphasen können auch mehrfach hintereinander oder in unterschiedlichen Phasen der Kältebehandlung erfolgen. Im Anschluss an die Aufwärmphase erfolgt jeweils eine erneute Abkühlung um die gleiche Temperaturdifferenz, der sich eine erneute Erwärmung eine weitere Abkühlung oder das Halten auf dem erreichten Temperaturwert anschließt. Beispielsweise erfolgt während der Haltephase bei einer unteren Zieltemperatur von beispielsweise zwischen minus 150°C und minus 195°C, eine ein- oder mehrmalige Erwärmung der Elektrode auf eine Temperatur von minus140°C bis minus 160°C.

Der Einsatz von nach dem erfindungsgemäßen Verfahren behandelten Drahtelektroden als abschmelzende, stromgeführte Drahtelektrode führt gegenüber unbehandelten Elektroden zu einem verbesserten Schweißergebnis und zu einer reduzierten Schweißspritzerneigung. Die Verbesserung tritt bei allen untersuchten Elektrodenmaterialien auf, insbesondere bei aus Eisen oder einer Eisenlegierung bestehenden und/oder mit einer Stahlhülle ausgerüsteten Drahtelektroden, die zum Schweißen von ferritischen oder austenitischen Stählen bestimmt sind. Es eignet sich für Elektroden aus Massivdraht ebenso wie für Fülldrähte, insb. Metallpulverfülldrähte. Das erfindungsgemäße Verfahren eignet sich zudem zur Behandlung von Drahtelektroden für alle Schweißverfahren, bei denen abschmelzende, stromgeführte Drahtelektroden zum Einsatz kommen, insbesondere Lichtbogenschweißverfahren, wie das MSG- oder das UP-Schweißen.

Im Übrigen können zusätzlich zur Behandlung der Elektrode nach dem erfindungsgemäßen Verfahren bei der Durchführung der Schweißarbeit weitere Maßnahmen zur Reduzierung der Spritzerneigung getroffen werden, wie sie insbesondere aus dem Stande der Technik bekannt und oben beschrieben werden. Die Erfindung wird hierdurch nicht berührt.

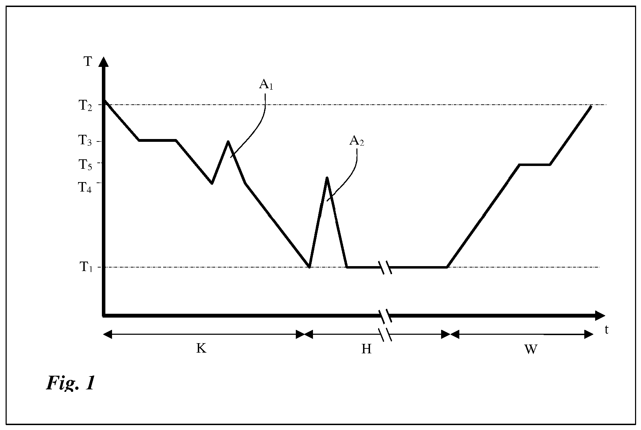

Anhand der Zeichnung soll ein Ausführungsbeispiel der Erfindung näher erläutert werden. Die Zeichnung zeigt in einem Temperatur (T) - Zeit (t) - Diagramm schematisch den Verlauf der Temperatur einer Drahtelektrode während der Behandlung nach einem erfindungsgemäßen Verfahren.

Eine bei Umgebungstemperatur vorliegende Drahtelektrode wird einer Kältekammer zugeführt und diese anschließend verschlossen. Durch sukzessive Zuführung eines Kältemittels, beispielsweise kalter gasförmiger Stickstoff mit einer Temperatur von minus 190°C, wird die Temperatur der Atmosphäre im Innern der Kältekammer langsam, beispielsweise mit einer Geschwindigkeit ΔT/Δt zwischen 1°C/min und 10 °C/min, abgesenkt. Dadurch sinkt die Temperatur der Drahtelektrode während einer Abkühlphase K auf eine untere Zieltemperatur T₁ von beispielsweise minus 150°C. Im Anschluss an die Abkühlphase K wird die Drahtelektrode für einen Zeitraum von beispielweise 1 min bis 100 min auf der unteren Zieltemperatur T₁ gehalten (Haltephase H). Im Anschluss an die Haltephase H wird die Drahtelektrode durch Zufuhr eines Gases (beispielsweise Stickstoff), dessen Temperatur höher als die Temperatur im Innern der Kältekammer ist, allmählich, d.h. mit einer Aufwärmgeschwindigkeit, die der Abkühlgeschwindigkeit in der Abkühlphase K vergleichbar ist, auf eine obere Zieltemperatur T₂, erwärmt (Aufwärmphase W). T₂ entspricht beispielsweise der Umgebungstemperatur.

Um aufgrund der Kältebehandlung auftretende Spannungen im behandelten Material abzubauen, ist es vorteilhaft, die Temperatur des Werkstücks in der Kältekammer während der Abkühlphase K und/oder der Haltephase H vorübergehend zu erhöhen. In diesen zwischenzeitlichen Aufwärmphasen A₁, A₂ erfolgt eine Temperaturerhöhung um beispielsweise 10°C bis 50°C auf eine Wert unterhalb der Anfangstemperatur. Im hier gezeigten Ausführungsbeispiel erfolgt eine erste zwischenzeitliche Aufwärmphase A₁, nachdem die Temperatur der Drahtelektrode einen Wert von T₄ erreicht hat, und eine zweite Aufwärmphase A₂, nachdem die untere Zieltemperatur T₁ erreicht wurde. Im Anschluss an die Aufwärmphase A₂ kann sich eine weitere zwischenzeitliche Aufwärmphase anschließen, oder das Werkstück verbleibt für eine gewisse Zeitdauer auf der unteren Zieltemperatur T₁.

Während der Abkühlphase K kann die Zufuhr des Kältemittels ein- oder mehrmals gestoppt und dadurch die Abkühlung der Drahtelektrode verlangsamt oder auf einer vorgegebenen Temperatur gehalten werden. Ebenso kann in der Aufwärmphase W die Zufuhr von warmem Gas ein- oder mehrmals unterbrochen und so die Aufwärmgeschwindigkeit verlangsamt oder die Drahtelektrode auf einer vorgegebene Temperatur gehalten werden. In diesen Zwischenhaltephasen gilt also ΔT/Δt << 1 °C/min. Im in der Zeichnung gezeigten Ausführungsbeispiel ist eine Zwischenhaltephase während der Abkühlphase K bei der Temperaturen T₃ mit T₁ < T₃ < T₂ und während der Aufwärmphase W bei einer Temperatur T₅ mit T₁<T₅<T₂ gezeigt. Nach der Kältebehandlung wird die Drahtelektrode aus der Kältekammer entnommen und ist einsatzfertig.

## Patentansprüche

1. Verfahren zur thermischen Behandlung einer abschmelzenden Drahtelektrode, bei der die Drahtelektrode vor ihrem bestimmungsgemäßen Einsatz als abschmelzende, stromgeführte Drahtelektrode einer Kältebehandlung unterzogen wird, in der die Drahtelektrode in einer Abkühlphase auf eine untere Zieltemperatur von unter minus 50°C abgekühlt und anschließend in einer Aufwärmphase auf eine obere Zieltemperatur erwärmt wird.

2. Verfahren nach Anspruch 1, **dadurch gekennzeichnet, dass** die untere Zieltemperatur zwischen minus 50°C und minus 195°C, bevorzugt zwischen minus 100°C und minus 185°C beträgt.

3. Verfahren nach Anspruch 1 oder 2, **dadurch gekennzeichnet, dass** die obere Zieltemperatur zwischen 20°C und 40°C beträgt.

4. Verfahren nach einem der vorhergehenden Ansprüche, **dadurch gekennzeichnet, dass** die Drahtelektrode nach der Abkühlphase und vor der Aufwärmphase eine Haltephase durchläuft, in der die Drahtelektrode für eine Dauer von mindestens 30s auf der unteren Zieltemperatur gehalten wird.

5. Verfahren nach einem der vorhergehenden Ansprüche, **dadurch gekennzeichnet, dass** die Abkühlung der Drahtelektrode in der Abkühlphase und/oder das Aufwärmen der Drahtelektrode in der Aufwärmphase mit einer Geschwindigkeit von nicht schneller als 10 °C/min, bevorzugt zwischen 1°C/min und 10 °C/min erfolgt.

6. Verfahren nach einem der vorhergehenden Ansprüche, **dadurch gekennzeichnet, dass** die Abkühlphase und/oder die Aufwärmphase für eine vorgegebene Zeitdauer unterbrochen wird, während der die Drahtelektrode auf einer erreichten Temperatur im wesentlichen gehalten wird.

7. Verfahren nach einem der vorhergehenden Ansprüche, **dadurch gekennzeichnet, dass** die Drahtelektrode während der Abkühlphase und/oder der Haltephase mehrfach erwärmt und anschließend wiederabgekühlt wird.

8. Verfahren nach Anspruch 7, **dadurch gekennzeichnet, dass** die Drahtelektrode bei einer während der Abkühlphase und/oder der Haltephase erfolgenden Erwärmung jeweils um 10°C bis 50°C erwärmt und anschließend wieder um diese Temperaturdifferenz abgekühlt wird.

9. Verfahren nach einem der vorhergehenden Ansprüche, **dadurch gekennzeichnet, dass** die Drahtelektrode als Massivdraht oder als Fülldraht ausgebildet ist.

## Claims

1. Method for the thermal treatment of a consumable wire electrode, which involves subjecting the wire electrode, prior to its intended use as a consumable, current-carrying wire electrode, to a cold treatment in which the wire electrode in a cooling phase is cooled down to a lower target temperature of below minus 50°C and subsequently heated to an upper target temperature in a heating phase.

2. Method according to Claim 1, **characterized in that** the lower target temperature is between minus 50°C and minus 195°C, preferably between minus 100°C and minus 185°C.

3. Method according to Claim 1 or 2, **characterized in that** the upper target temperature is between 20°C and 40°C.

4. Method according to any of the preceding claims, **characterized in that**, after the cooling phase and before the heating phase, the wire electrode passes through a holding phase, in which the wire electrode is held at the lower target temperature for a duration of at least 30s.

5. Method according to any of the preceding claims, **characterized in that** the cooling of the wire electrode in the cooling phase and/or the heating of the wire electrode in the heating phase take place at a rate of not quicker than 10°C/min, preferably between 1°C/min and 10°C/min.

6. Method according to any of the preceding claims, **characterized in that** the cooling phase and/or the heating phase is interrupted for a mandated time period during which the wire electrode is held substantially at a temperature reached.

7. Method according to any of the preceding claims, **characterized in that** during the cooling phase and/or the holding phase, the wire electrode is heated and subsequently cooled again two or more times.

8. Method according to Claim 7, **characterized in that** in the case of heating during the cooling phase and/or the holding phase, the wire electrode is heated in each case by 10°C to 50°C and subsequently cooled again by this temperature difference.

9. Method according to any of the preceding claims, **characterized in that** the wire electrode is configured as a solid wire or as a flux-cored wire.

## Revendications

1. Procédé de traitement thermique d'un fil-électrode fusible, lors duquel le fil-électrode est soumis à un traitement à froid avant son utilisation prévue en tant que fil-électrode fusible alimenté en courant, dans lequel le fil-électrode est refroidi dans une phase de refroidissement jusqu'à une température cible inférieure de moins de moins 50 °C et est ensuite réchauffé dans une phase de réchauffement jusqu'à une température cible supérieure.

2. Procédé selon la revendication 1, **caractérisé en ce que** la température cible inférieure est comprise entre moins 50 °C et moins 195 °C, de préférence entre moins 100 °C et moins 185 °C.

3. Procédé selon la revendication 1 ou 2, **caractérisé en ce que** la température cible supérieure est comprise entre 20 °C et 40 °C.

4. Procédé selon l'une quelconque des revendications précédentes, **caractérisé en ce que** le fil-électrode passe, après la phase de refroidissement et avant la phase de réchauffement, par une phase de maintien dans laquelle le fil-électrode est maintenu à la température cible inférieure pendant une durée d'au moins 30 s.

5. Procédé selon l'une quelconque des revendications précédentes, **caractérisé en ce que** le refroidissement du fil-électrode dans la phase de refroidissement et/ou le réchauffement du fil-électrode dans la phase de réchauffement s'effectue à une vitesse qui n'est pas supérieure à 10 °C/min, de préférence comprise entre 1 °C/min et 10 °C/min.

6. Procédé selon l'une quelconque des revendications précédentes, **caractérisé en ce que** la phase de refroidissement et/ou la phase de réchauffement sont interrompues pendant une période de temps prédéterminée, pendant laquelle le fil-électrode est essentiellement maintenu à une température atteinte.

7. Procédé selon l'une quelconque des revendications précédentes, **caractérisé en ce que** le fil-électrode est réchauffé plusieurs fois pendant la phase de refroidissement et/ou la phase de maintien, puis de nouveau refroidi.

8. Procédé selon la revendication 7, **caractérisé en ce que** le fil-électrode est à chaque fois réchauffé de 10 °C à 50 °C lors d'un réchauffement effectué pendant la phase de refroidissement et/ou la phase de maintien, puis de nouveau refroidi de cette différence de température.

9. Procédé selon l'une quelconque des revendications précédentes, **caractérisé en ce que** le fil-électrode est configuré sous forme de fil massif ou sous forme de fil plein.
